# EUROPÄISCHE PATENTANMELDUNG

(11) **EP 1 666 948 A2**
(43) Veröffentlichungstag der Anmeldung: **07.06.2006**
(21) Anmeldenummer: 06001657.3
(22) Anmeldetag: 21.02.2002
(51) Int. Cl.: G02B 21/22, G02B 21/00

(54) **Verfahren zur Steuerung der Betriebsarten eines Stereo-Operationsmikroskops**

(30) Priorität: 23.02.2001 DE 10108989; 23.02.2001 DE 10108988; 12.04.2001 DE 10118702; 12.04.2001 DE 10118703; 26.11.2001 DE 10157613
(62) Teilanmeldung aus: 02100162.3
(71) Anmelder: Leica Microsystems (Schweiz) AG, 9435 Heerbrugg (CH)
(72) Erfinder: Spink, Roger, 9442 Berneck (CH); Déverin, Jaques Dr., 9443 Widnau (CH); Mannss, Jürgen, 3672 Oberdiessbach (CH); Moser, Benno, 9442 Berneck (DE)
(74) Vertreter: Rosenich, Paul

(57) **Zusammenfassung**

Die Erfindung betrifft ein Verfahren zum Steuern der Betriebsarten eines Stereo-Operationsmikroskops, bei dem in einem der beiden Hauptstrahlengänge (2a, 2b) oder beiden Hauptstrahlengängen (2a, 2b) bzw. einem Assistentenstrahlengang (20a, 20b) oder beiden Assistentenstrahlengängen (20a, 20b) wahlweise ein Objektbild oder ein eingespiegeltes Bild oder eine Kombination hiervon sichtbar ist.

## Beschreibung

Die Erfindung betrifft eine Blendensteuerung für die Integration von Zusatzdaten In einen Beobachtungs-Strahlengang oder in mehrere Beobachtungs-Strahlengänge eines Stereo-Operationsmikroskops zur wahlweisen Abschaltung eines unerwünschten Beobachtungs-Bildkanals.

In modernen Operationsmikroskopen ist es üblich, Zusatzinformationen in eines der beiden Zwischenbilder einzublenden. Diese Bildinformationeri werden entweder den originären optischen Bilddaten passgenau überlagert-z.B.: kon-elierte Daten, CT-, MRI-Konturen - oder ohne Bezug zur optischen Objektabbildung dargestellt (nicht-korretierte Bilddaten, Standard-Schnitte, etc.), indem der betreffende Objektstrahlengang ausgeblendet wird. Oder sie werden in einem begrenzten Teilbereich überlagert (Monitoring-Kurven, Menüs etc.).

Im Fall der Abblendung des Objektlichts wird eine Blende zwischen Objektstrahlengeng und den die Zusatzinformation einblendenden Strahlenteiler geschoben, sodass nur die zusätzlich eingeblendete Information sichtbar ist. Eine derartige Blendenanordnung ist aus der WO-A2-01/27659 bekannt, die am 19.4.2001 publiziert wurde. Diese bekannte Anordnung bot jedoch keine Möglichkeit, unter Ausnutzung des weiteren Strahlverlaufes mehrere Benutzer wahlweise die Zusatzinformation und/oder das Objektbild betrachten lassen zu können. Aus der Fig. der WO-A2-01/27659 wird vielmehr deutlich, dass ein erster Assistent am Assistentenanschluss (11) lediglich das Objektbild, nicht jedoch das eingespiegelte Bild aus dem Display (1) sehen kann. Ein zweiter Assistent, der beispielsweise über ein Okular am zweiten Assistententubus (19) Einblick nimmt, sieht überhaupt lediglich einen Bildkanal - und zwar den rechten Hauptstrahlengang (18)-und kann somit wahlweise entweder das Objektbild oder überhaupt nichts sehen, wenn die dritte Blende (20) geschlossen ist; dies jeweils jedoch nicht unabhängig vom Hauptbeobachter am Okular (15), der im rechten Hauptstrahlengang (18) immer das gleiche Bild wie der zweite Assistent sieht Dem konnte beim bekannten Stand der Technik nur dadurch abgeholfen werden, dass eine zusätzliche Einspiegelungsvorrichtung für den dritten Hauptstrahlengang vorgesehen worden ist, vgl. hierzu Seite 4, Zeile 14 bis Seite 5, Zeile 19 der WO-A2-01/27659.

Aus dem angegebenen Grund mangelt es dem bekannten Stand der Technik an Flexibilität für die Steuerung der Beobachtungsmöglichkeiten. Auch ist beim bekannten Stand der Technik eine Einschränkung insofern gegeben, als die Einspiegelung in beide Hauptstrahiengänge (4 und 18)-wie schon enrvähnt-zwei Elnspiegelungsvorrichtungen (1,2, 3 usw.) erfordert, was zusätzliche Platz- und Baugrößenprobieme mit sich bringt

Es ist weiterhin eine "Multivision" genannte Einrichtung von Zeiss bekannt, die es einem Assistenten erlaubt, das gleiche Bild wie ein Hauptbeobachter zu sehen, unabhängig davon, ob dieser ein Objektbüd oder ein mit einem Zusatzbild überlagertes Objektbild sieht. Die Flexibilität bei der Beobachtungsmöglichkeit ist somit nachteiligerweise ebenso eingeschränkt

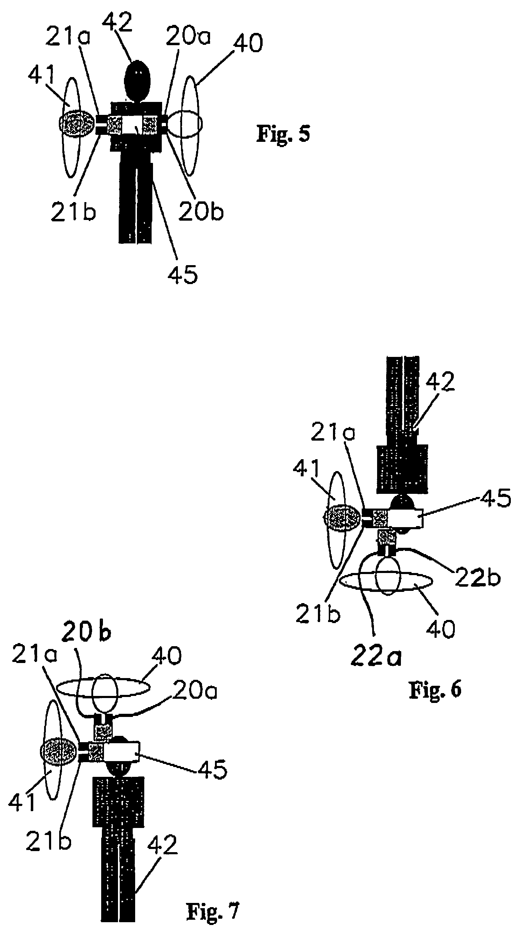

Bei Operationsmikroskopen sind grundsätzlich hinsichtlich ihrer Funktionen drei unterschiedliche Beobachtungs- bzw. Anwendungsarten zu unterscheiden, wobei zur Erläuterung der folgenden Ausführungen auf die Fig. 5-7 verwiesen wird, die Mikroskopstellungen aus dem Stand der Technik wiedergeben. Bei diesen Figuren bedeuten dabei die Bezugszeichen figurenübergreifend schematisch dargestellte Personen beziehungsweise Gegenstände:
Patient (Objekt) 42, Optikträger (eines Operationsmikroskops) 45, Chirurg (Hauptbeobachter) 41, Assistent 40, Beobachtungsausgang (Hauptokular) linker Strahlengang 21 a und rechter Strahlengang 21 b, Beobachtungsausgang (Assistentenokular) für stereoskopische Beobachtung 20a und 20b (nur in Fig. 5) und für monokulare Beobachtung rechter Strahlengang 20b (Fig. 6) und linker Strahlengang 20a (Fig. 7).
   (1) Ein Chirurg (Hauptbeobachter) 41, der grundsätzlich (fast ausschließlich) die Beobachtungsausgänge 21 a und 21 b stereoskopisch benutzt und im Allgemeinen Ober Art und Zeitpunkt des Einspiegelns sowie über die Frage der Überlagerung oder Nichtüberlagerung der Zusatzinformation entscheidet (Fig. 5);
   (2a) ein Assistent, der fast ausschließlich entweder die rechts von den Haupt-Beobachtungsausgängen 21 a und 21 b angeordneten Beobachtungsausgänge 22a und 22b - wie z.B. in Fig. 6 - oder die links von den Haupt-Beobachtungsausgängen 21 a und 21 b angeordneten Beobachtungsausgänge 20a und 20b - wie z.B. in Fig. 7 - monoskopisch verwendet, wenn er im rechten Winkel zum Chirurgen 41 und dem Mikroskop steht (Craniotomie), oder
   (2b) die Beobachtungsausgänge 20a und 20b werden stereoskopisch verwendet, wenn der Assistent 40 dem Chirurgen 41 gegenüber und hinter dem Mikroskop steht, wie in Fig. 5 dargestellt (spinale Operationen);
   (3) eine Beobachtergruppe befindet sich neben dem Mikroskop oder sogar außerhalb des Operationssaals, die im Wesentlichen diejenigen Informationen auf einem Monitor im oder außerhalb des Operationssaals sehen sollte, die der Chirurg (Hauptbeobachter) 41 wahmimmt und somit gar nicht selbst durch das Mikroskop blickt, sondern die Beobachtung Ober die Betrachtung einer Videoaufnahme durchführt.

Im "Beobachter"-Fall 1) stehen dem Chirurgen 41 bei stereoskopischem Einblick in die beiden Okulare aufgrund der Zusatzinformation in einem einzigen Bildkanal - insbesondere bei Datensubstitution durch das Einblenden z.B. von Video-Daten in diesen Sildkanal-zwei unterschiedliche Bild-Informationen im Vergleich mit dem zweiten Bildkanal zur Verfügung, die ihn irrifiieren können.

Es ist daher die Aufgabe der vorliegenden Erfindung, die erwähnten Nachteile zu beseitigen und Verfahren aufzuzeigen, die die Flexibilität der Beobachtungsmöglichkeiten erhöhen und dies auch ohne zusätzliche Einspiegefungsvoffichtungen - d.h. ohne zusätzliche Strahlengänge und baugruppen-vergrößernde Maßnahmen - zu realisieren.

Gelöst wird diese Aufgabe durch die Merkmale und Verfahrensschritte des Patentanspruchs 1. Weitere Verfahren ergeben sich aus den Unteransprüchen. Durch den erfndungsgemäßen Einsatz zusätzlicher Blenden und in einem weiteren Schritt durch eine neuartige Blendensteuerung wird dem Chirurgen das Abschalten des im Moment nicht gewünschten Objektbilds beziehungsweise ein Management der den jeweiligen (Haupt- und/oder Assistenten-) Beobachtern zur Verfügung gestellten Bildinformationen ermöglicht.

Die gewünschte Flexibilität wird erreicht, indem in wenigstens einem Hauptstrahlengang wenigstens eine zweite schaltbare Blende zwischen dem Ausspiegelungs-Strahlenteiler und dem Haupt-Beobachtungsausgang angeordnet ist und indem in jedem Hauptstrahlengang ein Einspiegelungs-Strahlenteiler angeordnet ist So kann flexibel für mehrere Assistenten und den Hauptbeobachter wahlweise Bildinformation zur Verfügung gestellt werden, zum Teil unabhängig von dem, was dem Hauptbeobachter geliefert wird.

Dies ist dann optimiert, wenn zwischen jedem Einspiegelungs-Strahlenteiler und dem Hauptobjektiv und jedem Ausspiegelungs-Strahlenteiler und dem Haupt-Beobachtungsausgang je eine schaltbare erste bzw. zweite Blende angeordnet sind. Unter einer "schaltbaren Blende" wird erfindungsgemäß jede Blendeneinrichtung verstanden, die einen Strahlengang öffnet oder schließt Damit sind sowohl mechanische als auch opto-elektronische Blenden oder dergleichen umfasst

Eine weitere Flexibilisierung und Verbesserung der Anwendbarkeit sowie der Reduktion von unnötigen Lichtverlusten kann bei einem erfindungsgemäßen Stereo-Operationsmikroskop mit wenigstens einem Neben-Beobachtungsausgang (Assistentenausgang) erreicht werden, wenn auch zwischen wenigstens einem Ausspiegelungs-Strahlenteiler und dem Neben-Beobachtungsausgang eine dritte schaltbare Blende (19a, 19b) angeordnet ist, was wiederum optimiert wird, wenn vor jedem Neben-Beobachtungsausgang eine dritte schaltbare Blende (19a,19b) angeordnet ist.

Vor allem bei Stereo-Operafionsmikroskopen, bei denen pro Hauptstrahlengang wenigstens zwei Neben-Beobachtungsausgänge vorgesehen sind - also bei besonders flexibel einsetzbaren Operationsmikroskopen - ist es vorteilhaft, wenn diese Beobachtungsausgänge in der gleichen Radialebene in Bezug auf den Hauptstrahlengang liegen - also zB. ein Ausgang seitlich des Ausspiegelungs-Strahlenteilers und ein Ausgang hinter dem Ausspiegelungs-Strahlenteiler (d.h. um 90° versetzt) - und dass der Ausspiegelungs-Strahlenteiler drehbar ist, sodass er die Ausspiegelungs-Bildinformation wahlweise dem einen oder anderen Neben-Beobachtungsausgang zufohrt.

Da dies zu einer Bilddrehung führt, soll oder kann diese bei Bedarf erfindungsgemäß elektronisch (im Videosignal) berücksichtigt und korrigiert werden. Die Detaillösung zu dieser erfindungsgemäßen Weiterbildung kann der EP 1237030 entnommen werden, auf die der Fachmann hiermit ausdrücklich rückverwiesen wird, um die Möglichkeiten einer optimierten Umschaltung zu verstehen.

Eine besonders kleine Baugröße ergibt sich bei einem erfindungsgemäßen Stereo-Operationsmikroskop, bei dem wenigstens einer der Einspiegelungs-Strahlenteiler gleichzeitig auch als Ausspiegelungs-Strahlenteiler - z.B. für Videobildsensoren oder auch andere Bildaufzeichnungsvorrichtungen - ausgebildet ist

Eine besonders bevorzugte - weil platzsparende - Entwicklung ergibt sich, wenn beiden Einspiegelungs-Strahlenteilern in den beiden Hauptstrahlengängen ein gemeinsamer Einspiegelungs-Strahlengang zugeordnet ist, der wahlweise dem einen oder anderen oder aber beiden Einspiegelungs-Strahlenteilem zuschaltbar ist. Die Detaillösung zu dieser erfindungsgemäßen Weiterbildung kann der EP 1237031 entnommen werden, auf die hiermit ausdrücklich rückverwlesen wird, um die Möglichkeiten einer optimierten Umschaltung zu verstehen. Eine Variante ergibt sich, wenn der Einspiegelungs-Strahlengang ein Umlenkprisma, das vorzugsweise dreh- oder schwenkbar und derart wahlweise dem linken oder rechten Hauptstrahlengang zuordenbar ist, umfasst Bei einer anderen Variante, wie in der zweiten Figur der EP 1237031 angegeben, ist das Umlenkprisma nicht zwischen den Einspiegelungs-Strahlenteilern, sondern dahinter angeordnet Dadurch wird eine Bilddrehung vermieden.

Gemäß einer Weiterentwicklung der Erfindung ist wenigstens ein Teil der Blenden mit einer Steuereinrichtung verbunden, die im Betriebszustand wenigstens einen Teil der Blenden anhand von applikations- und/oder benutzerspezifischen Gesichtspunkten schließt oder öffnet. Somit kann z.B. ein Anwender sein persönliches Anwendungsprofiil festlegen und dieses bei Bedarf jederzeit wieder abrufen, ohne neuerlich aufwändige Voreinstellungen vornehmen zu müssen.

Die Steueraufgaben werden erleichtert, wenn wenigstens ein Stellungs- oder Positionsdetektor vorgesehen ist, der im Betriebszustand die Stellung oder Position der Ausspiegelungsprlsmen undloder des Umlenkprismas undloder der Blenden erfasst und mit der Steuereinrichtung verbunden ist und die Blendensteuerung entsprechend ausrichtet, da so auch manuelle Override-Einstellungen berücksichtigt und Fehlschaltungen vermieden werden können.

Zur weiteren Optimierung und Vereinfachung ist vorgesehen, dass die Steuereinrichtung mit einer Steuerung für die eingespiegelte Zusatzinformation (Videacontroller) verbunden ist, um in Abhängigkeit von der jeweiligen Stellung der Ausspiegelungsprismen und/oder des Umlenkprismas und/oder der jeweiligen Blendenstellung und/oder der jeweiligen Beobachterwünsche das über ein Display eingespiegelte Bild zu beeinflussen, sodass der jeweilige Anwender automatisch die gewünschte bzw. erforderliche Bildinformation erhält

Die Steuereinrichtung umfasst beispielsweise wenigstens einen Blenden-Controller, wenigstens einen Controller mit Speicher für Datentyp-Information und Benutzer-Setup und/oder wenigstens eine Steuerung und Sensorik für die Position der Ausspiegelungs-Strahlenteiler und/oder des Umlenkprismas, wobei sie insbesondere automatisch und/oder manuell einstellbar ist

Eine Erleichterung und Steigerung der Effizienz von IGS-Operationen ("IGS" = Image Guided Surgery) erhält man, wenn die Steuereinrichtung mit der Operationssteuerungseinrichtung (IGS) verbunden ist und im Betriebszustand wenigstens den Einblendzustand in den linken oder rechten Mauptstrahlengang signalisiert.

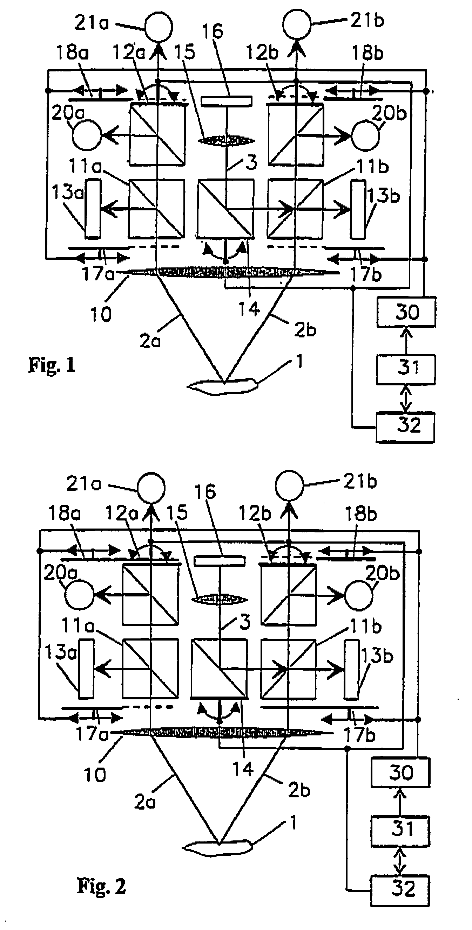

Zur weiteren Erläuterung wird auf die Zeichnungen verwiesen, wobei in den Fig. 1-4 schematische Darstellungen unterschiedlicher Slendenpositionen enthalten sind. In den Fig. 5-7 sind die bekannten Positionierungs-Varianten des Chirurgen und des Assistenten bezüglich des zu beobachtenden Patienten dargestellt

In Fig.1 1 projiziert ein Display 16 entlang des Strahlengangs für die Zusatzinformation(en) 3 mittels einer Optik 15 und eines schaltbaren Prismas 14 (mögliche Projektion in den linken oder rechten Strahlengang) ein mit Zuatzinformationen versehenes Bild In den rechten Strahlengang 2b. Über den Strahlteiler 11 b wird diese Information mit dem Bild des Objekts 1 überlagert und dem optionalen Bildsensor 13b und dem weiteren Beobachtungsstrahlengang 20b zugeführt.

In den Fig. 1-4 ist eine Steuerleitung symbolisiert, die Blenden und Prismen steuert und/oder deren Position bzw. Stellung detektiert. An den Stellen, an denen neben einer möglichen Steuerung auch eine Positionsdetektion möglich ist, ist an der Steuerleitung ein Punkt eingezeichnet. Blenden in den stereoskopischen Strahlengängen können miteinander auch mechanisch gekoppelt sein, wenn sie jeweils gemeinsam geschaltet werden sollen.

Mittels der Blenden 18a und 18b kann sich der Beobachter-falls gewünscht **-** nur auf die Zusatzinformation konzentrieren. In Fig. 2 wird die Zusatzinformation auf den rechten Hauptstrahlengang 2b geschaltet, die geschlossene Blende 18a im linken Hauptstrahlengang 2a lässt somit für den Chirurgen 41 nur die Sicht 21 b auf die Zusatzinformation mit dem rechten Auge zu. Das linke Auge sieht nichts. Der Assistentenausgang kann ebenfalls geschaltet werden" entweder zu den beiden seitlichen monoskopischen Ausgängen, oder zum hinteren stereoskopischen Ausgang, je nach chirurgischer Applikation.

In cranieller Applikation sieht ein seitlich links stehender Assistent 40 über den Ausgang 20a das Objektbild monoskopisch, nicht aber die Zusatzinformation; ein seitlich rechts stehender Assistent 40 nimmt monoskopisch über den Ausgang 20b - wie der Chirurg 41- nur die Zusatzinformationen wahr. In spinaler Applikation nimmt der Assistent 40 beide Informationen stereoskopisch Ober die Ausgänge 20a und 20b wahr. Somit sieht er auch beide Informationen mit unterschiedlichem Gehalt.

Im Controller 31 können Vorlieben bestlmmter Chirurgen gespeichert werden und im Applikationsfall abgerufen werden. Zum Beispiel möchte Chirurg A immer beide Informationen gleichzeitig sehen; die Blenden 18a und 18b bleiben in diesem Fall immer geöffnet. Der Chirurg B möchte aber beispielsweise ausschließlich die eingeblendete Information; je nach Schaltposition des Prismas 14 schließt der Blendencontroller 30 Blende 18a oder 18b.

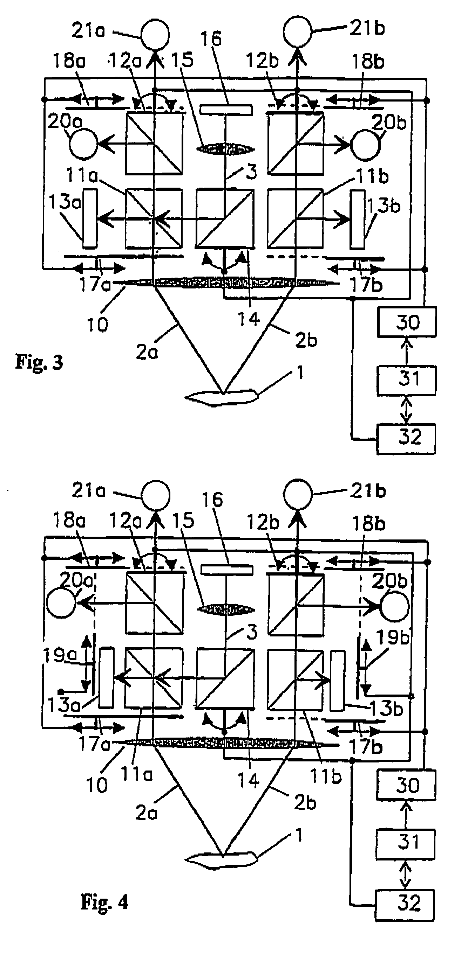

Fig. 3 zeigt die Einstellung mit eingeblendeten Zusatzinformationen im linken Strahlengang und geöffneten Blenden im chirurgischen Strahlengang 21a und 21 b.

In Fig. 4 ist die Anordnung der Blenden für die Assistentenausgänge ersichtlich. Dies sind im Wesentlichen die Blenden 19a und 19b, die sich im Falle eines rückwärtig positionierten Assistenten 40 (spinale Anordnung) schließen lassen.

Die Erfindung bietet folgende Vorteile:
- Sie ermöglicht das wahlweise Abschalten von zeitweise unerwünschtem oder den Chirurgen 41 störendem ObJektbild;
- der Assistent 40 kann in jeder Applikation mit einem Bild des Objekts 1 versorgt werden:
- ein angeschlossenes Kamerasystem kann das Objekt 1 immer detektieren;
- die Blendenfiunlction adaptiert sich automatisch an die aktuelle oder sich ändernde Position der Zusatzinformation(en).

### Bezugszeichenliste

- 1: Objekt (Patient)
- 2a: Hauptstrahlengang = Objektstrahl, linker Strahlengang
- 2b: Hauptstrahlengang = Objektstrahl, rechter Strahlengang
- 3: Einspiegelungs-Strahlengang für Zusatzinformation(en)
- 10: Hauptobjektiv
- 11a: Einspiegelungs-Strahlenteiler linker Strahlengang, Video und Zusatzinformationen
- 11b: Einspiegelungs-Strahlenteiler rechter Strahlengang, Video und Zusatzinformationen
- 12a: Ausspiegelungs-Strahlenteiler linker Strahlengang, 1. und 2. Beobachter
- 12b: Ausspiegelungs-Strahlenteiler rechter Strahlengang, 1. und 2. Beobachter
- 13a: Videobildsensor linker Strahlengang
- 13b: Videobildsensor rechter Strahlengang
- 14: (schaltbares) Umlenkprisma (Strahlengang Zusatzinformationen)
- 15: Abbildungsoptik für (16)
- 16: Display für Zusatzinformationen
- 17a: Schaltbare erste Blende zum Ausblenden des Objektlichts im linken Strahlengang
- 17b: Schaltbare erste Blende zum Ausblenden des Objektlichts im rechten Strahlengang
- 18a: Schaltbare zweite Blende zum Ausblenden des Objektlichts im linken Strahlengang
- 18b: Schaltbare zweite Blende zum Ausblenden des Objektlichts im rechten Strahlengang
- 19a: Schaltbare dritte Blende zum Ausblenden des Objektlichts im linken Assistentenstrahlengang
- 19b: Schaltbare dritte Blende zum Ausblenden des Objektlichts im rechten Assistentenstrahlengang
- 20a: Links angeordneter Neben-Beobachtungsausgang (Assistentenausgang) für monokulare Beobachtung durch einen Assistenten 40, linker Strahlengang
- 20b: Links angeordneter Neben-Beobachtungsausgang (Assistentenausgang) fOr monokulare Beobachtung durch einen Assistenten 40, rechter Strahlengang
- 21 a: Haupt-Beobachtungsausgang für Stereobeobachtung für 41, linker Strahlengang
- 21 b: Haupt-Beobachtungsausgang für Stereobeobachtung für 41, rechter Strahlengang
- 22a: Rechts angeordneter Neben-Beobachtungsausgang (Assistentenausgang) für monokulare Beobachtung durch einen Assistenten 40, linker Strahlengang
- 22b: Rechts angeordneter Neben-Beobachtungsausgang (Assistentenausgang) für monokulare Beobachtung durch einen Assistenten 40, rechter Strahlengang
- 30: Blenden-Controller (zur Detektion der Position bzw. Stellung und/oder zur Steuerung der Blenden)
- 31: Controller Datentyp-Information mit Speicher und Benutzer-Setup
- 32: Steuerung und Sensorik der Rotationsprismen (zur Detektion der Position bzw. Stellung und/oder zur Steuerung der Prismen)
- 40: Assistent
- 41: Chirurg
- 42: Patient
- 45: Optikträger

## Patentansprüche

1. Verfahren zur Steuerung der Betriebsarten eines Stereo-Operationsmikroskops, Letzteres umfassend
- ein Hauptobjektiv (10),
- einen Haupt-Beobachtungsausgang (21a, 21 b),
- einen linken und einen rechten Hauptstrahlengang (2a, 2b),
wobei in jedem der Hauptstrahlengänge (2a, 2b) vom Hauptobjektiv (10) ausgehend
ein Einspiegelungs-Strahfenteiler (11 a, 11 b) zur Einblendung von Zusatzinformationen und in wenigstens einem der Hauptstrahlengänge (2a, 2b) wenigstens ein Ausspiegelungs-Strahlenteiler (12a,12b)
in dieser Reihenfolge angeordnet sind,
- wenigstens eine erste schaltbare Blende (17a, 17b) zum Abschalten eines Objektbildes eines Objekts (1), die zwischen dem Hauptobjektiv (10) und dem Einspiegelungs-Strahlenteiler (11a, 11b) angeordnet ist.
**dadurch gekennzeichnet, dass** mindestens eine der schaltbaren Blenden (17a,17b) derart steuerbar ist, dass das Objektbild des Objekts (1) zusammen mit der Zusatzinformation dargestellt wird.

2. Verfahren nach Anspruch 1, **dadurch gekennzeichnet, dass** mindestens eine der schaltbaren Blenden (1 7a, 17b) derart steuerbar ist, dass die Zusatzinformation im Hauptstrahlengang (2a, 2b) alleine dargestellt wird.

3. Verfahren nach einem der vorhergehenden Ansprüche, **dadurch gekennzeichnet, dass** wenigstens eine zweite schaltbare Blende (18a, 18b), die zwischen dem Ausspiegelungs-Strahlenteiler (12a, 12b) und dem Haupt-Beobachtungsausgang (21a, 21 b) angeordnet ist, die derart steuerbar ist, sodass weder die Zusatzinformation zusammen mit dem Objektbild, noch die Zusatzinformation alleine, noch das Objektbild alleine im jeweiligen Hauptstrahlengang (2a, 2b) dargestellt wird.

4. Verfahren nach Anspruch 3, **dadurch gekennzeichnet, dass** die Zusatzinformation in mindestens einen Hauptstrahlengang (2a, 2b) eingespiegelt wird und wahlweise bei geöffneter erster schaltbaren Blende (17a, 17b) zusammen mit dem Objektbild dargestellt wird
oder bei geschlossener erster schaltbaren Blende (17a,17b) alleine dargestellt wird
und bei Bedarf die zweite schaltbare Blende (18a, 18b) geschlossen wird, sodass weder die Zusatzinformation zusammen mit dem Objektbild, noch die Zusatzinformation alleine, noch das Objektbild alleine im jeweiligen Hauptstrahlengang (2a, 2b) dargestellt wird.

5. Verfahren nach einem der vorhergehenden Ansprüche, **dadurch gekennzeichnet, dass** die ersten schaltbaren Blenden (17a, 17b) derart steuerbar sind, dass in Kombination mit einer Steuerbarkeit eines schaltbaren Umlenkprismas (14) für die Einspiegelung der Zusatzinformation wahlweise im linken Hauptstrahlengang (2a) oder im rechten Hauptstrahlengang (2b) das Objektbitd alleine dargestellt wird.

6. Verfahren nach Anspruch 5, **dadurch gekennzeichnet, dass** wahlweise im linken Hauptstrahlengang (2a) oder im rechten Wauptstrahlengang (2b) das Objektbild zusammen mit der Zusatzinformation, z.B. dem Bild mindestens eines Displays (16), dargestellt wird.

7. Verfahren nach Anspruch 6, **dadurch gekennzeichnet, dass** wahlweise im linken Hauptstrahlengang (2a) oder im rechten Hauptstrahlengang (2b) die Zusatzinformation, z.B. das Bild des Displays (16), alleine dargestellt wird.

8. Verfahren nach einem der Ansprüche 5-7, **dadurch gekennzeichnet, dass** das schaltbare Umlenfcprisma (14) derart ausgestaltet und steuerbar ist, dass gleichzeitig in den linken Hauptstrahlengang (2a) und in den rechten Hauptstrahlengang (2b) eingespiegelt wird.
